(19) Europäisches Patentamt / European Patent Office / Office européen des brevets

(11) **EP 2 192 399 A1**

(12) **EUROPEAN PATENT APPLICATION**
published in accordance with Art. 153(4) EPC

(43) Date of publication:
**02.06.2010 Bulletin 2010/22**

(51) Int Cl.:
*G01N 21/35* [(2006.01)]  *A01G 7/00* [(2006.01)]
*C12G 1/02* [(2006.01)]  *G01N 21/84* [(2006.01)]

(21) Application number: **08831838.1**

(22) Date of filing: **22.09.2008**

(86) International application number:
**PCT/JP2008/067066**

(87) International publication number:
**WO 2009/038206 (26.03.2009 Gazette 2009/13)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **21.09.2007 JP 2007246268**

(71) Applicant: **Suntory Holdings Limited**
**Kita-ku, Osaka-shi**
**Osaka 530-8203 (JP)**

(72) Inventors:
• **SHINODA, Kentaro**
  **Kawasaki-shi**
  **Kanagawa 211-0067 (JP)**
• **OKAWA, Eiiti**
  **Kai-shi**
  **Yamanashi 400-0103 (JP)**
• **IMAI, Takahiro**
  **Kai-shi**
  **Yamanashi 400-0103 (JP)**

(74) Representative: **Heunemann, Dieter**
**Vossius & Partner**
**Siebertstrasse 4**
**81675 München (DE)**

(54) **VISIBLE/NEAR-INFRARED SPECTRUM ANALYZING METHOD AND GRAPE FERMENTING METHOD**

(57) A visible/near-infrared spectrum analyzing method for identifying components of a sample and determining characteristics of the components using visible light and/or near-infrared light having a wavelength of 400 to 2500 nm. The quantitative determination of the components, which have been conventionally hard to identify, of a grape of a small fruit cultivar for wine making can be made in a nondestructive way. A grape of a small fruit cultivar for wine making (a sample under examina-tion) is irradiated with visible light and/or near-infrared light having a wavelength of 600 to 1100 nm and is sub-jected to spectrum determination of the sample and an absorption spectrum is determined from the obtained spectrum. By employing a multivariate statistical analysis (hereinafter referred to multivariate analysis) by the PLS or MLR method, a model enabling quantitative determi-nation of the components of the sample under examina-tion is created.

*Figure 6*

EP 2 192 399 A1

**Description**

TECHNICAL FIELD

The present invention relates to a spectrum analyzing method for determining components in each sample using visible light and/or near-infrared light (at least one of visible light and near-infrared light), and more particularly, to a visible/near-infrared spectrum analyzing method suitable for determining components such as sugar content, malic acid concentration and amount of pigment of a grape of a small fruit cultivar for wine making.
Furthermore, the present invention also relates to a grape fermenting method using the visible/near-infrared spectrum analyzing method.

BACKGROUND ART

Visible light and near-infrared light having a wavelength of 400 to 2500 nm are generally electromagnetic waves having extremely small absorption intensity with respect to matter, less susceptible to scattering and with low energy, and thereby allow chemical and physical information to be obtained without destroying a sample under examination. Therefore, it is possible to immediately obtain information on the sample under examination by irradiating the sample under examination with visible light and/or near-infrared light, detecting intensity of a transmitted light or scattered reflected light spectrum from the sample under examination, determining absorbance by the sample under examination and subjecting the absorbance data obtained to a multivariate statistical analysis (hereinafter, referred to as "multivariate analysis").
Recently, quantitative determination of components in a fruit is made by various types of apparatuses using visible light and/or near-infrared light (see Patent Document 1).
Furthermore, regarding quantitative determination locations, there are examples of handy type visible/near-infrared spectrum analyzers targeted at not only indoor but also outdoor analyses (see Patent Document 2).
Patent Document 1: Japanese Patent Laid-Open No.2007-024651
Patent Document 2: Japanese Patent Laid-Open No.2005-127847

DISCLOSURE OF THE INVENTION

PROBLEMS TO BE SOLVED BY THE INVENTION

Regarding conventional component analyzing methods using visible light and/or near-infrared light, there are examples of application to objects (samples under examination) such as "Kyoho" and "Pione" which are grapes of a large fruit cultivar and kind of grapes to be eaten raw, but such methods are not applicable to grapes of a small fruit cultivar for wine making.
Here, the grapes of a small fruit cultivar for wine making refer to cultivars like Cabernet Sauvignon, Cabernet Franc, Merleau, Chardonnay and Sauvignon Blanc.
The reason that the component analyzing method using visible light and/or near-infrared light applicable to grapes of a large fruit cultivar is not applicable to grapes of a small fruit cultivar for wine making will be described below.
Grapes for wine making have not only a feature that they are small fruits but also a feature that there are greater variations in amounts of fruit components such as sugar content and acid degree as the maturity of the fruit progresses than other fruits or grapes of a large fruit to be eaten raw. Therefore, when chronologically measuring the progress of components of fruit of grape in a farm field, it is necessary to create a calibration formula model using a multivariate analysis over a wide range of component concentration, and the component analyzing method using visible light and/or near-infrared light applicable to grapes of a large fruit cultivar cannot be used as they are.
Furthermore, there are a variety of cultivars of grape for wine making and it is desirable to create a calibration formula model which can be commonly applied to some of those cultivars.
However, when an attempt is made to apply one calibration formula model to a wide component concentration range, the waveform of the spectrum is greatly affected by maturity of grape, and it has been hard to create a calibration formula model that allows practical measurement.
Furthermore, even if an attempt is made to change a model to be applied according to the maturity of grape, there is no method for accurately determining the maturity in a nondestructive way and determination of the maturity is substantially impossible.
Furthermore, to keep track of a variation in maturity for a grape growing period, it is important to measure the maturity of grapes bearing fruit on bearing branches in an outdoor farm field, but this measurement is conducted under circumstances where there are various disturbing factors such as humidity and light compared to an indoor environment, which results in a problem that influences of such an external environment further make it harder to create a calibration formula model.

As described above, it is difficult to apply the component analyzing method for grapes of a large fruit cultivar to grapes of a small fruit cultivar, and moreover there are a variety of cultivars of grapes for wine making and attempting to create a calibration formula model common to various cultivars also results in a problem that it is difficult to create a practical calibration formula model.

In order to solve the above described problems, it is an object of the present invention to provide a spectrum analyzing method for determining components in each sample using visible light and/or near-infrared light; a visible/near-infrared spectrum analyzing method capable of determining each component of a grape of a small fruit cultivar for wine making.

MEANS FOR SOLVING THE PROBLEMS

In order to attain the above described object, the visible/near-infrared spectrum analyzing method according to claim 1 relates to a visible/near-infrared spectrum analyzing method including a step of irradiating a sample under examination indoors or outdoors with at least one of visible light and near-infrared light whose wavelength is included in a range of 400 nm to 2500 nm and determining a spectrum of the sample under examination, and a step of calculating an absorption spectrum from the spectrum, applying a multivariate analysis to the absorption spectrum calculated and creating an analysis model. In this visible/near-infrared spectrum analyzing method, the sample under examination is a grape of a small fruit cultivar for wine making. Furthermore, in this visible/near-infrared spectrum analyzing method, a configuration is adopted in which a spectrum of transmitted light or scattered reflected light from a fruit of grape, the sample under examination, is determined, a quantitative analysis is performed which digitizes characteristics of components using a multivariate analysis, for example, by a PLS method (Partial Least Squares) or MLR method (Multi Linear Regression) and a calibration formula model capable of determining the components of the sample under examination is created.

The invention according to claim 1 having the above described configuration makes a spectrum analysis by determining a variation in a response spectrum due to a variation in concentration of the components such as sugar content, malic acid concentration, amount of pigment of a grape of a small fruit cultivar for wine making and makes a multivariate analysis. Therefore, it is possible to catch a variation in response which cannot be directly determined from a graph of the spectrum and obtain a calibration formula model capable of determining the components of grape of a small fruit cultivar, which have been hard to determine using conventional methods.

In the visible/near-infrared spectrum analyzing method according to claim 2, light irradiated onto the sample under examination has a wavelength of 600 nm to 1100 nm.

According to the invention of claim 2 having the above described configuration, light of 600 nm to 1100 nm (visible light and near-infrared light) has extremely small absorption intensity of irradiating light with respect to matter, and is electromagnetic wave less susceptible to scattering and with low energy, and can thereby obtain chemical and physical information without destroying the sample under examination.

The visible/near-infrared spectrum analyzing method according to claim 3 is targeted at each cultivar and/or a plurality of cultivars of grape of a small fruit cultivar for wine making.

According to the invention of claim 3 having the above described configuration, it is possible to obtain not only a calibration formula model for each single cultivar of grape of a small fruit cultivar for wine making, which is the sample under examination, but also a calibration formula model applicable to a plurality of cultivars.

The invention according to claim 4 having the above described configuration determines maturity of the sample under examination according to a value of an absorption spectrum obtained over a certain range of wavelength or the absorption spectrum subjected to standardization processing or first-order derivative processing or second-order derivative processing and changes a calibration formula model to be applied according to the maturity determination result.

According to the invention of claim 4 having the above described configuration, in a relationship between the absorption spectrum over a certain range of wavelength or the absorption spectrum subjected to standardization processing or first-order derivative processing or second-order derivative processing and a target component in the sample, it is possible to classify the samples under examination from the standpoint of maturity by dividing the samples under examination into two groups at a value at which the movement of the spectrum varies significantly. By changing the calibration formula model according to the classification, it is possible to avoid influences of the difference in maturity causing the waveform of the spectrum to vary significantly and deteriorating the accuracy of the calibration formula model, and it is possible to obtain a high accuracy, practical calibration formula model.

In the visible/near-infrared spectrum analyzing method according to claim 5, the wavelength at which maturity of the sample under examination is determined is 600 nm to 640 nm or 700 nm to 760 nm.

According to the invention of claim 5 having the above described configuration, maturity of the sample under examination is classified using the value obtained from the absorption spectrum having a wavelength of 600 nm to 640 nm or 700 nm to 760 nm, and it is thereby possible to immediately determine maturity without destroying the sample under examination.

The visible/near-infrared spectrum analyzing method according to claim 6 measures sugar content (Brix), malic acid concentration and amount of pigment of a grape of a small fruit cultivar for wine making, the sample under examination.

According to the invention of claim 6 having the above described configuration, it is possible to create a calibration formula model that can measure sugar content, malic acid concentration and amount of pigment, which is important in controlling maturity of the fruit of grape for wine making and determining a harvesting time.

The visible/near-infrared spectrum analyzing method according to claim 7 continuously selects the grape of a small fruit cultivar for wine making according to a specified arbitrary sugar content (Brix) using the calibration formula model.

According to the invention of claim 7 having the above described configuration, it is possible to select a grape of a small fruit cultivar for wine making accurately according to the sugar content without destroying the sample under examination.

The grape fermenting method according to claim 8 ferments a grape of a small fruit cultivar for wine making selected in the selecting step of claim 7.

According to the invention of claim 8 having the above described configuration, it is possible to improve the quality of grape for wine making and improve the quality of wine.

The visible/near-infrared spectrum analyzing method according to claim 9 includes a step of continuously selecting grapes for wine making according to a specified arbitrary amount of pigment using the calibration formula model.

According to the invention of claim 9 having the above described configuration, it is possible to accurately select a grape of a small fruit cultivar for wine making according to the sugar content without destroying the sample under examination.

The grape fermenting method according to claim 10 ferments a grape of a small fruit cultivar for wine making selected in the selecting step of claim 9.

According to the invention of claim 10 having the above described configuration, it is possible to improve the quality of grape for wine making and improve the quality of wine.

The visible/near-infrared spectrum analyzing method according to claim 11 irradiates light onto the sample under examination and determines the spectrum of the sample under examination with the sample under examination bearing fruit on a bearing branch.

According to this visible/near-infrared spectrum analyzing method, it is possible to measure each component with a grape of a small fruit cultivar for wine making bearing fruit on a bearing branch and thereby chronologically measure transition of components of the grape of a small fruit cultivar for wine making in a growth period in a farm field.

The calibration formula model creating method according to claim 12 is a visible/near-infrared spectrum analyzing method for creating a calibration formula model to measure component values of a grape of a small fruit cultivar for wine making, including a step of irradiating visible light and/or near-infrared light onto a grape of a small fruit cultivar for wine making as a sample under examination and determining a spectrum of transmitted light or scattered reflected light, a step of calculating an absorption spectrum made up of absorbance of each wavelength based on the spectrum and a step of performing a quantitative analysis that digitizes characteristics of the components of the sample under examination through a multivariate analysis using the absorption spectrum and creating a calibration formula model that can determine the components of the sample under examination.

This visible/near-infrared spectrum analyzing method has operations and effects similar to those of claim 1.

The calibration formula model creating method according to claim 13 further includes a step of calculating a derivative value per wavelength of the absorption spectrum, wherein in the step of creating a calibration formula model, a multivariate analysis is performed using the derivative value as an explanatory variable and the component value of the sample under examination as a target variable to thereby create a visible/near-infrared spectrum analyzing method that can determine the component value of the sample under examination.

Since the absorbance itself often has a broad shape with influences of various contained substances overlapping with each other and therefore a derivative value of absorbance is used for the purpose of elimination of base line fluctuation, peak separation effect, emphasis of micro peaks and shoulder peak detection or the like. The accuracy of the multivariate analysis can thereby be improved.

Here, for example, a first-order derivative value or a second-order derivative value of absorbance can be used as the derivative value of absorbance. When a calibration formula model on the component value of fruit is created, it is empirically known that the accuracy is high when the first-order derivative value of absorbance is used, and therefore the first-order derivative value of absorbance is preferably used.

In the visible/near-infrared spectrum analyzing method according to claim 14, in the step of creating a calibration formula model, the calibration formula model is validated through cross-validation. According to this visible/near-infrared spectrum analyzing method, a high accuracy model can be created through cross-validation.

The visible/near-infrared spectrum analyzing method according to claim 15 determines maturity of the sample under examination based on the derivative value and changes a calibration formula model to be applied according to the maturity determination result. This visible/near-infrared spectrum analyzing method has operations and effects similar to those of claim 4.

ADVANTAGES OF THE INVENTION

According to the visible/near-infrared spectrum analyzing method according to the present invention, it is possible to obtain a high accuracy calibration formula model capable of determining fruit components of a grape of a small fruit cultivar for wine making, which has been conventionally hard to determine and thereby immediately determine components of the grape of a small fruit cultivar for wine making in a nondestructive way.

Furthermore, since nondestructive sampling on many samples is possible, it is possible to keep track of growing situations of grapes of a small fruit cultivar for wine making or determine a harvesting time or measure components more accurately to select grapes after harvest.

Furthermore, the visible/near-infrared spectrum analyzing method according to the present invention is applicable to quantitative determination of FAN (free amino acid) metabolizable by yeast in the grape sample.

BRIEF DESCRIPTION OF THE DRAWINGS

Figure 1 illustrates data obtained by performing smoothing processing and first-order derivative processing on the absorbance obtained from spectrum data;

Figure 2A illustrates a calibration formula model created using a PLS method assuming an absorbance first-order derivative value of spectrum of each wavelength as an explanatory variable and Brix in each sample as a target variable;

Figure 2B illustrates a calculation result of a regression coefficient;

Figure 3 illustrates a calibration formula model created using a PLS method assuming an absorbance first-order derivative value of spectrum of each wavelength as an explanatory variable and malic acid concentration in each sample as a target variable;

Figure 4 illustrates a calibration formula model created using a PLS method assuming an absorbance first-order derivative value of spectrum of each wavelength as an explanatory variable and an amount of pigment in each sample as a target variable;

Figure 5 illustrates an example of relationship between Brix of the sample of grape for wine making according to Example 1 and a first-order derivative value of spectrum absorbance at wavelength 720 nm; and

Figure 6 is a flowchart illustrating a procedure for creating a calibration formula.

Best Mode for Carrying Out the Invention

In order to attain an object of obtaining a visible/near-infrared spectrum analyzing method capable of determining components such as Brix (sugar content), malic acid concentration and amount of pigment of a grape of a small fruit cultivar for wine making, which have been hard to determine using conventional methods, the present invention allows the respective components of a sample under examination to be determined by irradiating the sample under examination of the grape of a small fruit cultivar for wine making with visible light and/or near-infrared light to apply a spectrum analysis to the sample under examination and creating a calibration formula model through a multivariate analysis using a PLS method or MLR method assuming each component of the grape of a small fruit cultivar for wine making as a target variable from many pieces of measured data obtained.

(Embodiment)

Hereinafter, an embodiment of the present invention will be explained with reference to the accompanying drawings.

As a spectrum analyzer used for a visible/near-infrared spectrum analysis according to the present invention, it is possible to use, for example, an apparatus capable of analyzing a transmitted light or scattered reflected light spectrum obtained by irradiating continuous wavelength light (visible light and/or near-infrared light) whose wavelength is included in a range of 400 nm to 2500 nm. For example, FQA-NIR GUN (manufactured by FANTEC Co., Ltd.), fruit selector K-BA100R (manufactured by Kubota Corporation) or Luminar 5030 AOTF NIR Analyzer (manufactured by Brimrose Corporation) can be used. However, the present invention is not limited to these apparatuses.

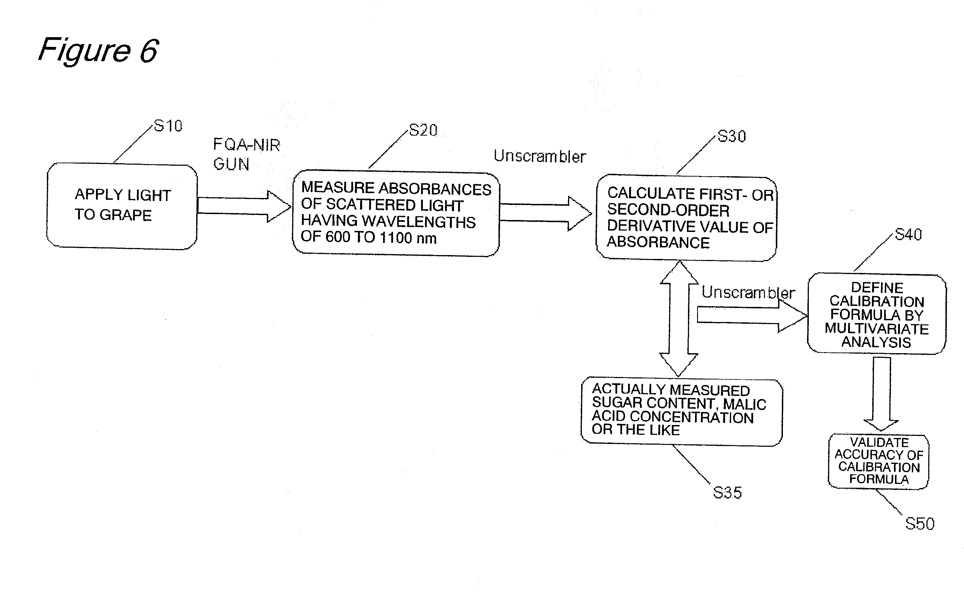

The calibration formula model according to the present embodiment is created by taking a case where an apparatus manufactured by FANTEC Co., Ltd. is used according to a procedure shown in Figure 6 as an example.

First, a sample under examination of grape for wine making is irradiated with visible light and/or near-infrared light to obtain a transmitted light or scattered reflected light spectrum (original spectrum (T)) (step S10). Here, the fruit of grape is irradiated with, for example, visible light and near-infrared light of 600 nm to 1100 nm. The irradiating light is preferably visible light and/or near-infrared light whose wavelength is included in a range of 400 nm to 2500 nm.

Next, absorbance is determined by calculating a logarithm of the reciprocal of the original spectrum (T) with respect to each wavelength of the irradiating light (log(1/T)) and an absorption spectrum is obtained by plotting these absorbances for each wavelength. For example, absorbance is calculated for each wavelength of 600 to 1100 nm and an absorption spectrum is obtained (step S20). For example, FQA-NIR GUN (manufactured by FANTEC Co., Ltd.) can be used for steps S10 and S20.

Furthermore, to perform a quantitative analysis using this absorption spectrum, by performing preprocessing such as auto scaling, smoothing processing, first-order derivative processing or second-order derivative processing on the absorption spectrum data, a first- or second-order derivative value (first- or second-order derivative data) of absorbance is obtained for each wavelength (step S30). For example, Unscrambler (manufactured by CAMO ASA) can be used for this step.

Furthermore, known component values (concentration or characteristic value) such as Brix, malic acid concentration, amount of pigment in the target sample under examination are measured separately (step S35). Here, "Brix" indicates percent concentration of a soluble solid content included in the sample under examination (aqueous solution) and indicates sugar content when the sample under examination is a fruit such as grape.

After that, it is possible to obtain a calibration formula model assuming the first- or second-order derivative data for each wavelength as an explanatory variable and a known component value (concentration or characteristic value: actually measured value) in the target sample under examination as a target variable, and performing a multivariate analysis to associate the two variables with each other using a PLS method (Partial Least Squares) or MLR method (Multi Linear Regression) (step S40). For this step, for example, Unscrambler (manufactured by CAMO ASA) can be used as in the case of step S30.

When the MLR method is used, the multivariate analysis can be performed by determining the following calculation (Equation 1).

$$(\text{Predicted value})=A1{\times}y(\lambda1)+A2{\times}y(\lambda2)+ \ldots \text{ (Equation 1)}$$

y(λ): first- or second-order derivative value of absorbance at wavelength λ
A1, A2, ... : coefficients

On the other hand, when the PLS method is used, a multivariate analysis is performed based on an algorithm described, for example, in Tobias, Randall D. (1997). An introduction to partial least squares regression. Cary, NC: SAS Institute.

Furthermore, a step of evaluating and validating prediction accuracy of the calibration formula through cross-validation may be added (step S50). Cross-validation is a validation method for evaluating prediction accuracy of the calibration formula using a sample under examination different from that when the calibration formula is created.

The above described preprocessing of the spectrum and multivariate analysis are performed using data processing software such as Unscrambler (manufactured by CAMO ASA), FQA utility (manufactured by FANTEC Co., Ltd.), Pirouette3.02 (manufactured by GL Sciences ASA). The data processing software is not limited to these software but any software for which a multivariate analysis can be used is applicable.

For measurements in the following examples, a nondestructive analyzing method was perfected for grapes for wine making that allows measurement with grapes actually bearing fruit on bearing branches in an outdoor farm field by shielding light with a cover covering the detection head section and photoflood head section of the measuring instrument to avoid influences of daylight and further creating a calibration formula model resistant to variations in fruit core temperature.

EXAMPLE 1

Example 1 is an example where an analysis was made on a model applicable to three cultivars of grape; Cabernet Sauvignon, Merleau and Cabernet Franc, which are grapes for wine making. A total of 157 samples including Cabernet Sauvignon (60 samples), Merleau (52 samples) and Cabernet Franc (45 samples) were measured using a portable type near-infrared spectroscope FQA-NIR GUN (manufactured by FANTEC Co., Ltd.) at three levels of temperature of 15°C, 25°C and 35°C at a wavelength ranging from 600 nm to 1100 nm and a total of 628 pieces of spectrum data were obtained. Assuming the absorbance first-order derivative value as an explanatory variable and Brix of the sample grape for wine making as a target variable, a model associating both variables with each other was created.

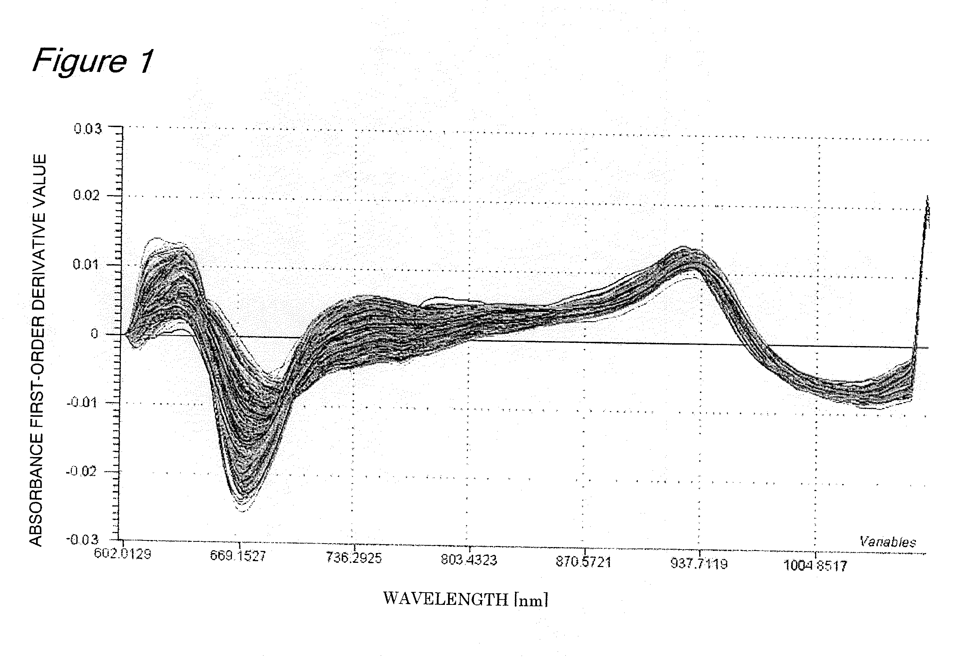

In Figure 1, the horizontal axis shows a wavelength (nm) and the vertical axis shows data (absorbance first-order derivative value) obtained by performing smoothing processing and first-order derivative processing on the absorbance obtained from spectrum data using Unscrambler (manufactured by CAMO ASA). This absorbance first-order derivative value is data resulting from the processing corresponding to steps S10 to S30 in Figure 6.

Furthermore, analysis values of Brix (actually measured values of Brix) were obtained for their respective spectra. Brix was measured using a digital sugar content meter (manufactured by Atago, Co., Ltd.) (corresponding to step S35 in Figure 6).

In order to explain these Brix values with spectrum absorbance first-order derivative values, a multivariate analysis was performed using a PLS method (corresponding to step S40 in Figure 6). In the present embodiment, a validation through cross-validation was conducted when the analysis was performed using the PLS method to create a high accuracy model (corresponding to step S50 in Figure 6). Here, the "cross-validation" is a validation method for evaluating prediction accuracy of a calibration formula using a sample under examination different from that when the calibration formula is created.

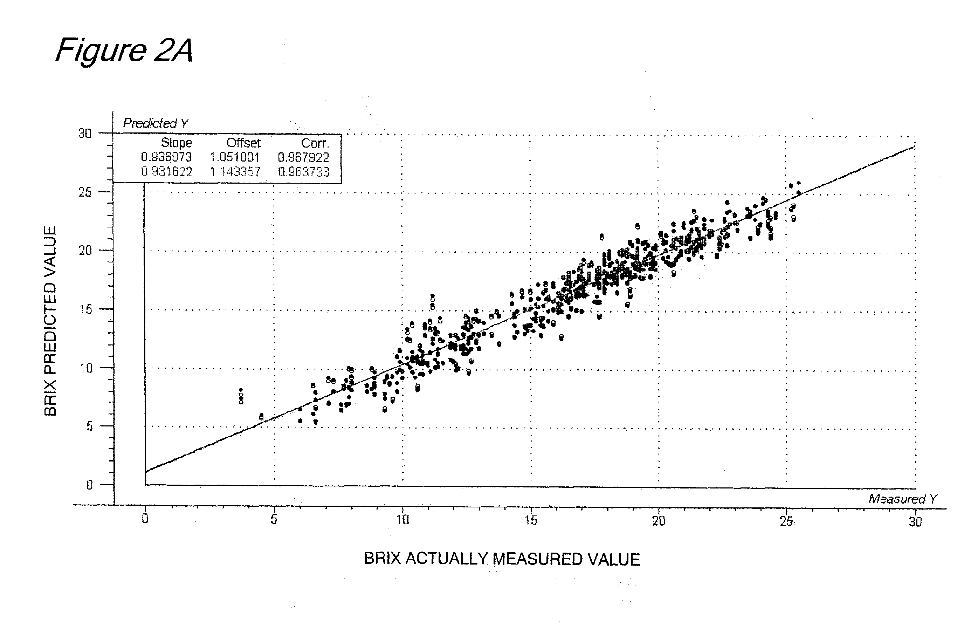

Figure 2A illustrates a result of a calibration formula model created assuming an absorbance first-order derivative value of spectrum of each wavelength as an explanatory variable and Brix in each sample as a target variable using Unscrambler (manufactured by CAMO ASA) by a PLS method and cross-validation. In the graph in Figure 2A, the horizontal axis shows an actually measured value of Brix and the vertical axis shows a predicted value of Brix according to the PLS regression analysis. In the figure, white circles denote a relationship between actually measured values and predicted values obtained by applying samples used to create a calibration formula to the created calibration formula and black circles denote a relationship between actually measured values and predicted values obtained by applying samples different from the samples used to create the calibration formula to the created calibration formula.

Table 1 shows a correlation function between a calibration formula and a prediction formula, and values of accuracy indices of the calibration formula and prediction formula. In Table 1, "CAL" denotes the calibration formula, "VAL" denotes the prediction formula, "Correlation" denotes a correlation coefficient, "SEC" denotes accuracy of the calibration formula, "SEP" denotes accuracy of the prediction formula and "PC Number" denotes the number of factors of a PLS regression analysis.

It is evident from Figure 2A and Table 1 that the actually measured value and the predicted value according to the created calibration formula have a significantly high correlation.

[Table 1]

| Brix | | Correlation | SEC | SEP | PC Number |
|---|---|---|---|---|---|
| All data | CAL | 0.968 | 1.15 | | 13 |
| | VAL | 0.964 | | 1.22 | 13 |

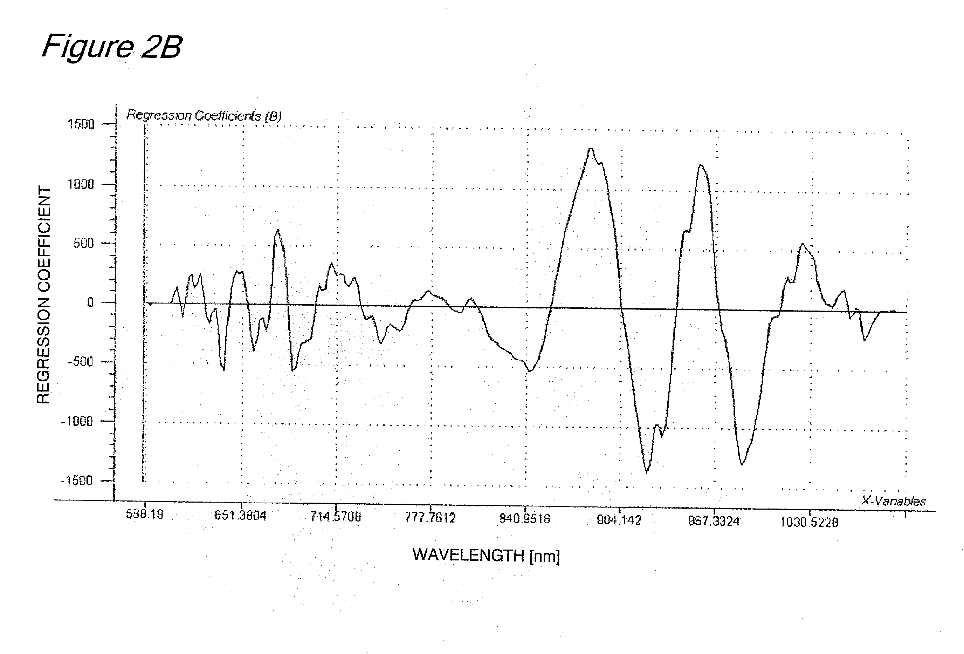

Furthermore, Figure 2B illustrates a calculation result of a regression vector. In Figure 2B, the horizontal axis shows a wavelength and the vertical axis shows a regression coefficient. The regression coefficient on the vertical axis represents the degree of contribution to the regression formula per wavelength and indicates that the greater the absolute value of the regression coefficient of a wavelength, the higher is the contribution.

EXAMPLE 2

Example 2 is a case where malic acid concentration in a sample of grape for wine making is assumed to be a target variable. The malic acid concentration in the sample was measured using a high performance liquid chromatography (manufactured by Shimadzu Corporation) (corresponding to step S35 in Figure 6).

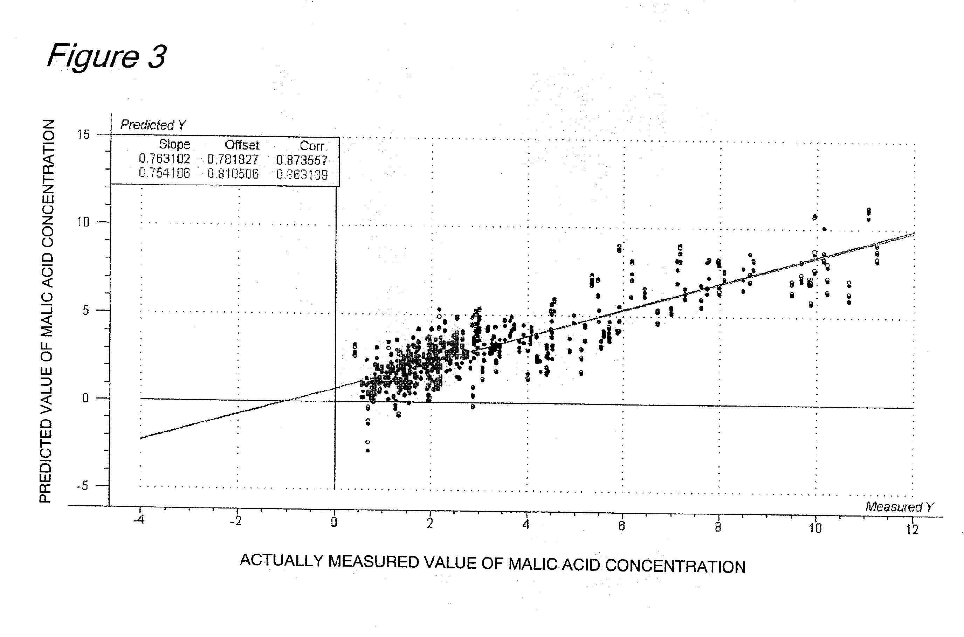

In order to explain the malic acid concentration (ppm) in the sample using an absorbance first-order derivative value of each wavelength obtained in Example 1 (data resulting from the processing corresponding to steps S10 to S30 in Figure 6), a calibration formula model is created using a PLS method and cross-validation (corresponding to steps S40 and S50 in Figure 6). The result is shown in Figure 3.

Figure 3 illustrates a result of a calibration formula model created using Unscrambler (manufactured by CAMO ASA) assuming an absorbance first-order derivative value of a spectrum of each wavelength as an explanatory variable and malic acid concentration (ppm) in each sample as a target variable using a PLS method and cross-validation. In the graph in Figure 3, the horizontal axis shows an actually measured value of malic acid concentration (ppm) and the vertical axis shows a predicted value of malic acid concentration (ppm) by a PLS regression analysis. In the figure, white circles denote a relationship between actually measured values and predicted values obtained by applying samples used to create a calibration formula to the created calibration formula and black circles denote a relationship between actually measured values and predicted values obtained by applying samples different from the samples used to create the calibration formula to the created calibration formula.

Table 2 shows a correlation function between the calibration formula and prediction formula, and values of accuracy indices of the calibration formula and prediction formula. Here, symbols in Table 2 represent meanings similar to those of the symbols used for Table 1.

It is evident from Figure 3 and Table 2 that the actually measured value and the predicted value according to the created calibration formula have a significantly high correlation also in the case where malic acid concentration in each sample is assumed to be a target variable.

[Table 2]

| MAL | | Correlation | SEC | SEP | PC Number |
|---|---|---|---|---|---|
| All data | CAL | 0.874 | 1.201 | | 10 |
| | VAL | 0.863 | | 1.247 | 10 |

EXAMPLE 3

Example 3 is a case where an amount of pigment in a sample of grape for wine making is assumed to be a target variable. The amount of pigment was measured by immersing the fruit skin of grape crushed using a homogenizer in hydrochloric acid in methanol and measuring absorbance at 520 nm.

A calibration formula model is created assuming the absorbance first-order derivative value of each wavelength obtained in Example 1 as an explanatory variable and the amount of pigment in the sample as a target variable using a PLS method and cross-validation.

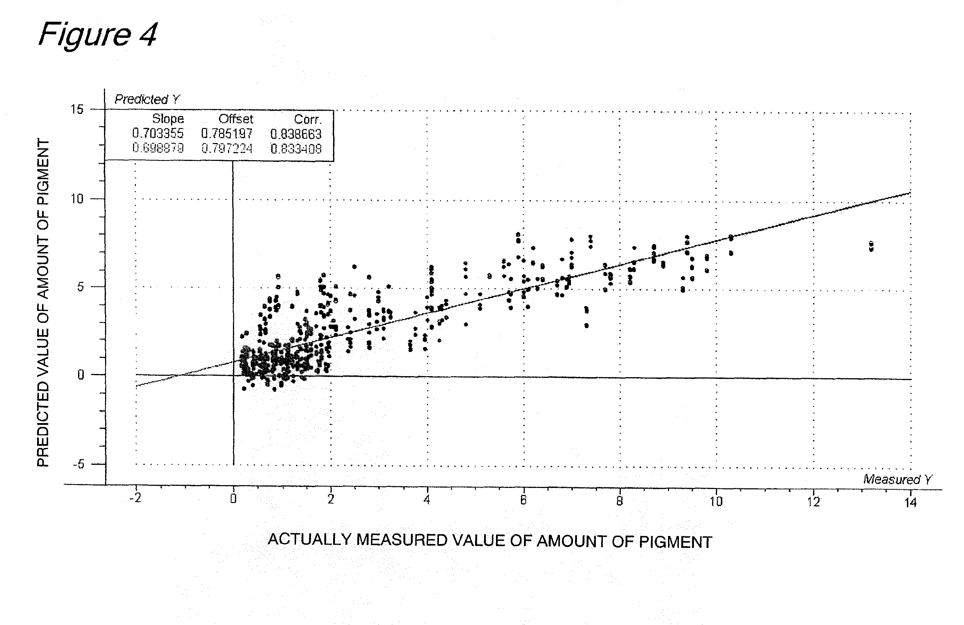

Figure 4 illustrates a result of a calibration formula model created using Unscrambler (manufactured by CAMO ASA) assuming the absorbance first-order derivative value of the spectrum of each wavelength as an explanatory variable and the amount of pigment in each sample as a target variable using a PLS method and cross-validation. In the graph in Figure 4, the horizontal axis shows an actually measured value of the amount of pigment and the vertical axis shows a predicted value of the amount of pigment by a PLS regression analysis. In the figure, white circles denote a relationship between actually measured values and predicted values obtained by applying samples used to create a calibration formula to the created calibration formula and black circles denote a relationship between actually measured values and predicted values obtained by applying samples different from the samples used to create the calibration formula to the created calibration formula.

Table 3 shows a correlation function between the calibration formula and prediction formula, and values of accuracy indices of the calibration formula and prediction formula. Here, symbols in Table 3 represent meanings similar to those of the symbols used for Table 1.

It is evident from Figure 4 and Table 3 that the actually measured value and the predicted value according to the created calibration formula have a significantly high correlation also in the case where the amount of pigment in each sample is assumed to be a target variable.

[Table 3]

| Amount of pigment | | Correlation | SEC | SEP | PC Number |
|---|---|---|---|---|---|
| All data | CAL | 0.839 | 1.448 | | 4 |
| | VAL | 0.833 | | 1.469 | 4 |

EXAMPLE 4

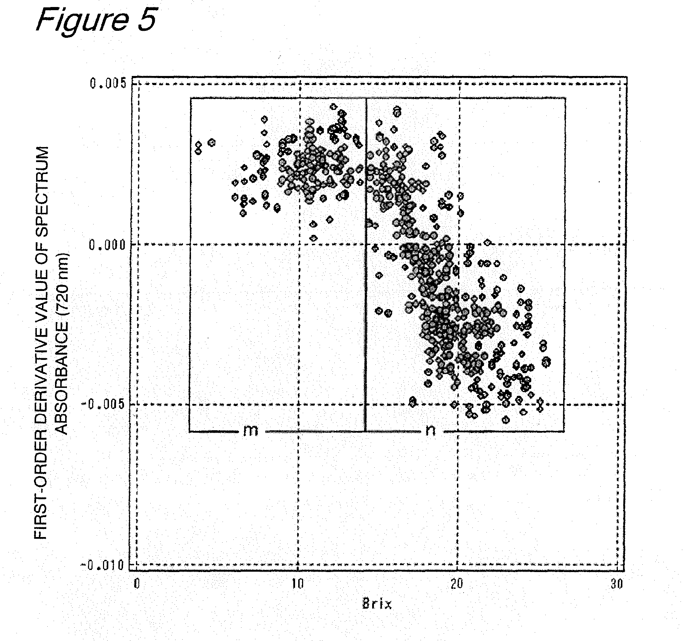

Figure 5 illustrates an example of a relationship between Brix of the sample of grape for wine making in Example 1 and a first-order derivative value of spectrum absorbance at wavelength 720 nm. In the same figure, the horizontal axis shows Brix and the vertical axis shows a first-order derivative value of a spectrum absorbance at wavelength 720 nm. As denoted by reference character "m" in Figure 5, the first-order derivative value of the spectrum absorbance shows a range of substantially constant values in a range where Brix is low (that is, where the maturity level is low), but when Brix then increases (that is, where the maturity level increases), the first-order derivative value of spectrum absorbance decreases in a range denoted by reference character "n" and it is observed that the behavior of the first-order derivative value of spectrum absorbance apparently differs before and after a certain Brix value (15 degrees in this example).

It is possible to assume that this variation in the relationship between Brix and the first-order derivative value of the spectrum absorbance degrades the accuracy of the calibration formula model. Therefore, the maturity of the sample under examination is classified by the first-order derivative value of the spectrum absorbance at this wavelength. That is, the maturity is divided into two groups; data corresponding to predetermined maturity or above and data corresponding to less than the predetermined maturity. A calibration formula model is then created for each of the two groups using Unscrambler (manufactured by CAMO ASA) through a PLS method and cross-validation. The result is shown in Table 4.

[Table 4]

| Brix | 720nm | Correlation | SEC | SEP | PC Number |
|---|---|---|---|---|---|
| All data (Example 1) | CAL | 0.968 | 1.15 | | 13 |
| | VAL | 0.964 | | 1.22 | 13 |
| Premature | CAL | 0.961 | 0.98 | | 14 |
| | VAL | 0.946 | | 1.14 | 14 |
| Reasonably mature | CAL | 0.921 | 0.88 | | 13 |
| | VAL | 0.891 | | 1.02 | 13 |

It is evident from Table 4 that when maturity is classified, and a calibration formula is created for each of "premature" and "reasonably mature," values of both SEC (calibration formula accuracy) and SEP (prediction formula accuracy) decrease. That is, SEC decreases from 1.15 to 0.98 and 0.88 and SEP decreases from 1.22 to 1.14 and 1.02, and accuracy levels of both the calibration formula and prediction formula improves. It is evident from this result that by classifying maturity of the sample using the first-order derivative value of the spectrum absorbance and creating a model using a PLS method and cross-validation respectively, it is possible to create a higher accuracy calibration formula model for a plurality of grape cultivars than before classification by maturity in Example 1.

According to present Example 4, it is possible to classify a sample under examination from the standpoint of maturity by dividing the samples under examination into two groups according to a value at which the motion of spectrum changes significantly in a relationship between an absorption spectrum or absorption spectrum subjected to standardization processing or first-order derivative processing or second-order derivative processing, and a target component (sugar content) in the samples. By changing the model of calibration formula according to the classification, it is possible to avoid the influences of the difference in maturity causing the waveform of the spectrum to vary significantly and deteriorating the accuracy of the calibration formula model, and obtain a high accuracy, practical calibration formula model.

Although the first-order derivative value of the spectrum absorbance at wavelength 720 nm was used in present Example 4, first-order derivative values of spectrum absorbance at other wavelengths may also be used. It is known by measurement that in a wavelength region of 600 nm to 640 nm or 700 nm to 760 nm, a distinct behavioral variation of the first-order derivative value of spectrum absorbance appears as in the case of Figure 5. Therefore, the wavelength for determining maturity of a sample under examination (sample of grape for wine making) is preferably selected from a wavelength region of 600 nm to 640 nm or 700 nm to 760 nm.

## Claims

1.  A visible/near-infrared spectrum analyzing method comprising:

    a step of irradiating a sample under examination indoors or outdoors with at least one of visible light and near-infrared light whose wavelength is included in a range of 400 nm to 2500 nm and determining a spectrum of the sample under examination; and
    a step of calculating an absorption spectrum from the spectrum, applying a multivariate analysis to the absorption spectrum calculated and creating an analysis model,

wherein the sample under examination is a grape of a small fruit cultivar for wine making, and
a spectrum of transmitted light or scattered reflected light from a fruit of grape, the sample under examination, is determined, a quantitative analysis is performed which digitizes characteristics of components using a multivariate analysis by a PLS method or MLR method and a calibration formula model capable of determining the components of the sample under examination is created.

2. The visible/near-infrared spectrum analyzing method according to claim 1, wherein light irradiated onto the sample under examination has a wavelength of 600 nm to 1100 nm.

3. The visible/near-infrared spectrum analyzing method according to claim 1 or 2, wherein a calibration formula model is created which is applicable to each cultivar or a plurality of cultivars of grape of a small fruit cultivar for wine making, the sample under examination.

4. The visible/near-infrared spectrum analyzing method according to any one of claims 1 to 3, wherein maturity of the sample under examination is determined according to a value of an absorption spectrum obtained over a certain range of wavelength or the absorption spectrum subjected to mathematical standardization processing or first-order derivative processing or second-order derivative processing and a calibration formula model to be applied is changed according to the maturity determination result.

5. The visible/near-infrared spectrum analyzing method according to claim 4, wherein the wavelength at which maturity of the sample under examination is determined is 600 nm to 640 nm or 700 nm to 760 nm.

6. The visible/near-infrared spectrum analyzing method according to any one of claims 1 to 5, wherein sugar content (Brix), malic acid concentration or amount of pigment of a grape of a small fruit cultivar for wine making, the sample under examination, are measured.

7. The visible/near-infrared spectrum analyzing method according to any one of claims 1 to 5, further comprising a step of continuously selecting the grape of a small fruit cultivar for wine making according to a specified arbitrary sugar content (Brix) using the calibration formula model.

8. A grape fermenting method for fermenting a grape of a small fruit cultivar for wine making selected in the selecting step according to claim 7.

9. The visible/near-infrared spectrum analyzing method according to any one of claims 1 to 5, further comprising a step of continuously selecting grapes for wine making according to a specified arbitrary amount of pigment using the calibration formula model.

10. A grape fermenting method for fermenting a grape of a small fruit cultivar for wine making selected in the selecting step according to claim 9.

11. The visible/near-infrared spectrum analyzing method according to any one of claims 1 to 7 or 9, wherein light is irradiated onto the sample under examination and the spectrum of the sample under examination is determined with the sample under examination bearing fruit on a bearing branch.

12. A visible/near-infrared spectrum analyzing method for creating a calibration formula model to measure component values of a grape of a small fruit cultivar for wine making, comprising:

a step of irradiating at least one of visible light and near-infrared light onto a grape of a small fruit cultivar for wine making as a sample under examination and determining a spectrum of transmitted light or scattered reflected light;
a step of calculating an absorption spectrum made up of absorbance of each wavelength based on the spectrum; and
a step of performing a quantitative analysis that digitizes characteristics of the components of the sample under examination through a multivariate analysis using the absorption spectrum and creating a calibration formula model that can determine the components of the sample under examination.

13. The visible/near-infrared spectrum analyzing method according to claim 12, further comprising a step of calculating a derivative value per wavelength of the absorption spectrum,
wherein in the step of creating a calibration formula model, a multivariate analysis is performed using the derivative value as an explanatory variable and the component value of the sample under examination as a target variable to thereby create a calibration formula model that can determine the component value of the sample under examination.

14. The visible/near-infrared spectrum analyzing method according to claim 12 or 13, wherein in the step of creating a calibration formula model, the calibration formula model is validated through cross-validation.

15. The visible/near-infrared spectrum analyzing method according to any one of claims 12 to 14, wherein maturity of the sample under examination is determined based on the derivative value and a calibration formula model to be applied is changed according to the maturity determination result.

*Figure 1*

Figure 2A

Figure 2B

Figure 3

EP 2 192 399 A1

# Figure 4

ACTUALLY MEASURED VALUE OF AMOUNT OF PIGMENT

EP 2 192 399 A1

Figure 5

## Figure 6

APPLY LIGHT TO GRAPE — S10

FQA-NIR GUN →

MEASURE ABSORBANCES OF SCATTERED LIGHT HAVING WAVELENGTHS OF 600 TO 1100 nm — S20

Unscrambler →

CALCULATE FIRST- OR SECOND-ORDER DERIVATIVE VALUE OF ABSORBANCE — S30

Unscrambler →

DEFINE CALIBRATION FORMULA BY MULTIVARIATE ANALYSIS — S40

ACTUALLY MEASURED SUGAR CONTENT, MALIC ACID CONCENTRATION OR THE LIKE — S35

VALIDATE ACCURACY OF CALIBRATION FORMULA — S50

EP 2 192 399 A1

18

<div align="center">

**INTERNATIONAL SEARCH REPORT**

</div>

| | International application No. |
|---|---|
| | PCT/JP2008/067066 |

A. CLASSIFICATION OF SUBJECT MATTER
*G01N21/35*(2006.01)i, *A01G7/00*(2006.01)i, *C12G1/02*(2006.01)i, *G01N21/84* (2006.01)i

According to International Patent Classification (IPC) or to both national classification and IPC

B. FIELDS SEARCHED

Minimum documentation searched (classification system followed by classification symbols)
G01N21/00-21/61, G01N21/84, A01G7/00, C12G1/02

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-527594 A (Autoline, Inc.),<br>16 September, 2003 (16.09.03),<br>Full text; all drawings<br>& US 6512577 B1  & US 2002/0011567 A1<br>& EP 1285244 A  & WO 2001/069191 A1<br>& AU 4571001 A  & CA 2402669 A<br>& NZ 521919 A  & BR 109219 A<br>& IL 151751 D  & CN 1430723 A | 1-13<br>14-15 |
| X | JP 2003-023890 A (Shizuoka-Ken),<br>28 January, 2003 (28.01.03),<br>Par. Nos. [0020] to [0031], [0042] to [0044];<br>Figs. 1, 8<br>(Family: none) | 1-2,12 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>17 December, 2008 (17.12.08) | Date of mailing of the international search report<br>06 January, 2009 (06.01.09) |
|---|---|
| Name and mailing address of the ISA/<br>Japanese Patent Office | Authorized officer |
| Facsimile No. | Telephone No. |

Form PCT/ISA/210 (second sheet) (April 2007)

## INTERNATIONAL SEARCH REPORT

International application No.

PCT/JP2008/067066

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2007/080935 A1 (The New Industry Research Organization), 19 July, 2007 (19.07.07), Par. Nos. [0065] to [0069] (Family: none) | 14-15 |
| Y | JP 11-173986 A (JASCO Corp.), 02 July, 1999 (02.07.99), Par. No. [0034] (Family: none) | 14-15 |
| A | JP 2002-516994 A (Elan Group Ltd.), 11 June, 2002 (11.06.02), Full text; all drawings & JP 11-326198 A & US 6507022 B1 & EP 1080366 A & WO 1999/061898 A1 & AUD 0PP365298 & NO 20005858 A & PL 344310 A & AU 746079 B & NZ 508435 A & CA 2332823 A & CN 1310798 A | 1-15 |
| A | JP 2006-300666 A (Nagoya University), 02 November, 2006 (02.11.06), Full text; all drawings (Family: none) | 1-15 |
| A | JP 2006-238849 A (Iseki & Co., Ltd.), 14 September, 2006 (14.09.06), Full text; all drawings (Family: none) | 1-15 |
| A | JP 2006-226775 A (National University Corporation Toyohashi University of Technology), 31 August, 2006 (31.08.06), Full text; all drawings (Family: none) | 1-15 |
| A | JP 2006-170669 A (Mitsui Mining & Smelting Co., Ltd.), 29 June, 2006 (29.06.06), Full text; all drawings (Family: none) | 1-15 |
| A | JP 8-304272 A (Kurabo Industries Ltd.), 22 November, 1996 (22.11.96), Full text; all drawings & US 5751418 A & EP 743513 A2 & DE 69636403 T & CN 1146011 A | 1-15 |
| A | JP 2-290537 A (Nireco Corp.), 30 November, 1990 (30.11.90), Full text; all drawings (Family: none) | 1-15 |

Form PCT/ISA/210 (continuation of second sheet) (April 2007)

**INTERNATIONAL SEARCH REPORT**

| International application No. |
|---|
| PCT/JP2008/067066 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 1-216265 A  (Director General of National Food Research Institute, Ministry of Agriculture, Forestry and Fisheries), 30 August, 1989 (30.08.89), Full text; all drawings (Family: none) | 1-15 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007024651 A
- JP 2005127847 A